(19) Europäisches Patentamt
European Patent Office
Office européen des brevets

(11) EP 1 528 728 B1

(12) EUROPEAN PATENT SPECIFICATION

(45) Date of publication and mention
of the grant of the patent:
20.08.2008 Bulletin 2008/34

(51) Int Cl.:
H04L 12/56 (2006.01)

(21) Application number: 04024224.0

(22) Date of filing: 12.10.2004

(54) **Packet scheduling based on quality of service and index of dispersion for counts**

Auf Dienstgüte und Zählendispersionsindex basierende Ablauffolgesteuerung von Paketen

Ordonnancement des paquets basé sur qualité de service et indice de dispersion des comptes

(84) Designated Contracting States:
AT BE BG CH CY CZ DE DK EE ES FI FR GB GR
HU IE IT LI LU MC NL PL PT RO SE SI SK TR

(30) Priority: 30.10.2003 US 697781

(43) Date of publication of application:
04.05.2005 Bulletin 2005/18

(73) Proprietor: Alcatel Lucent
75008 Paris (FR)

(72) Inventors:
• Kan, Chao
75035 Frisco
Texas (US)
• Skoog, Frederick H.
76034 Colleyville
Texas (US)

(74) Representative: Schmidt, Werner Karl
Alcatel Lucent
Intellectual Property & Standards
70430 Stuttgart (DE)

(56) References cited:
EP-A- 0 782 086          EP-A- 0 886 403
WO-A-03/084152

• G.Y. LAZAROU, X. XIA, V.S. FROST: "Internet Traffic Modeling Using the Index of Variability" IASTED INTERNATIONAL CONFERENCE MODELLING AND SIMULATION, February 2003 (2003-02), pages 1-6, XP002305119 Retrieved from the Internet: URL:http://www.ittc.ku.edu/publications/do cuments/Lazarou_ IASTEDmas2003-Geroge-traff ic-modeling.pdf> [retrieved on 2004-11-10]

• C. COURCOUBETIS, V.A. SIRIS, G.D.STAMOULIS: "Application of the many sources asymptotic and effective bandwidths to traffic engineering" TELECOMMUNICATIONS SYSTEMS, VOL.12, 1999, pages 1-27, XP002305120 Retrieved from the Internet: URL: http://www.ics.forth.gr/netgroup/publi cations/ts.msa.pdf> [retrieved on 2004-11-10]

**Description**

BACKGROUND OF THE INVENTION

The present embodiments relate to computer networks and are more particularly directed to a network with routers or switches configured to schedule traffic according to a dynamic fair mechanism in response to quality of service and an index dispersion of counts. In particular, the invention relates to a system according to the preamble of claim 1 and to a method according to the preamble of claim 6. Such system and method is known from WO 03/084152 A1.

As the number of users, traffic volume, and packet speed continue to grow on the global Internet and other networks, an essential need has arisen to provide efficient scheduling mechanisms for packet switched networks. More recently, scheduling has been implicated as needing to consider that the Internet is also evolving towards an advanced architecture that seeks to guarantee the quality of service ("QoS") for real-time applications. QoS dictates the treatment given to packets as they are routed in a network. One type of QoS framework seeks to provide hard specific network performance guarantees to applications such as bandwidth/delay reservations for an imminent or future data flow. Such QoS is usually characterized in terms of ability to guarantee to an application-specified peak and average bandwidth, delay, jitter, and packet loss. Another type is to use Class-of-Service ("CoS") such as Differentiated Services ("Diff-Serv") to represent the less ambitious approach of giving preferential treatment to certain kinds of packets, but without making any performance guarantees.

Given the preceding, scheduling mechanisms for packet traffic in switches and routers play a sometimes critical role in providing the QoS guarantees required by many applications such as video-on-demand and multimedia video or teleconferencing. Typical prior art implementations in a router include a number of queues, where packets in each queue belong to a predefined "flow," meaning those packets share one or more predefined attributes. With this structure, classical fair-share scheduling assigns a share of link bandwidth to each queue according to a defined weight for each queue in a fair manner for better QoS implementation. The scheduler chooses in what order service requests can access resources, dictates how to multiplex packets from different connections, and decides which packets to transmit. Various goals are often presented in connection with the scheduling philosophy. For example, a good service discipline should allow the network to treat users differently in accordance with their QoS requirements. As another example, preferably the service discipline can protect packets of well-behaving guaranteed source clients from unconstrained best effort traffic, that is, these sources are given certain bandwidth, yet this flexibility should not compromise the fairness of the scheme to such an extent such that a few classes of users should not be able to degrade service in other classes to the extent that performance guarantees are violated. To allocate bandwidth in a way that QoS of all active flows are satisfied as much as possible, the excess bandwidth of a flow or a class of flows is not only reused by that flow or class, but in some instances it is allocated to other flows or classes as well. The fair-share allocation intends that the flows having little QoS requirements such as Best-Effort traffic can capture the least bandwidth. The fairness for the excess bandwidth allocation can be weighted so that the flows in the higher classes can obtain more bandwidth.

In general, the prior art scheduling mechanisms fall into two categories, namely, static weight allocation and dynamic weight allocation. Many static schedulers in fast packet routers and switches attempt to provide fair service across a range of traffic classes by employing derivatives of the Generalized Processor Sharing ("GPS") discipline, in which each of the sessions sharing the link has a first-in first-out ("FIFO") queue. The scheduler assigns a predetermined weight to each different FIFO queue so that the packets stored in the respective queue are treated according to their assigned weight. However, GPS is limited in that it does not transmit packets as entities, and only one session can receive service at a time and an entire packet must be served before another packet can be served. A typical dynamic scheduling mechanism is the dynamic Weighted Fair Queuing, in which agents in the routers dynamically reconfigure the weights of their associated services. In this scheme, the weights are modified to reflect the changing QoS requirements of a number of packet streams as their queue sizes change over time based on the pre-defined committed information rates.

While the preceding approaches have merit in some applications, they also include various drawbacks. For example, ideally the traffic scheduler should be influenced by a number of parameters including packet delay and buffer occupancy. However, various static weight allocation mechanisms generally consider little of real-time traffic measurements and QoS information. Instead, they often determine the schedule by sorting the timestamps of packets contending for the link. The exception of brief dynamic behavior in Weighted Fair Queuing itself also focuses around the packet being serviced at that instant in time, and it does not consider the system as a whole and the effect it has on the other sessions later. Further, current dynamic weight allocation mechanisms are not optimized as most of them depend solely on the number of active flows. Although a few of them do consider the QoS information, they merely allocate the excess bandwidth according to the number of flows in a specific class of service or the pre-defined committed information rates.

In view of the above, there arises a need to address the drawbacks of the prior art, as is accomplished by the preferred embodiments described below.

BRIEF SUMMARY OF THE INVENTION

According to the invention, these objects are solved by a system according to claim 1 and by a method according to claim 6

Other aspects are also described and claimed.

BRIEF DESCRIPTION OF THE SEVERAL VIEWS OF THE DRAWING

Figure 1 illustrates a block diagram of a network system 10 into which the preferred embodiments may be implemented.

Figure 2 illustrates a functional block diagram of preferred aspects of a network packet transfer device of Figure 1.

DETAILED DESCRIPTION OF THE INVENTION

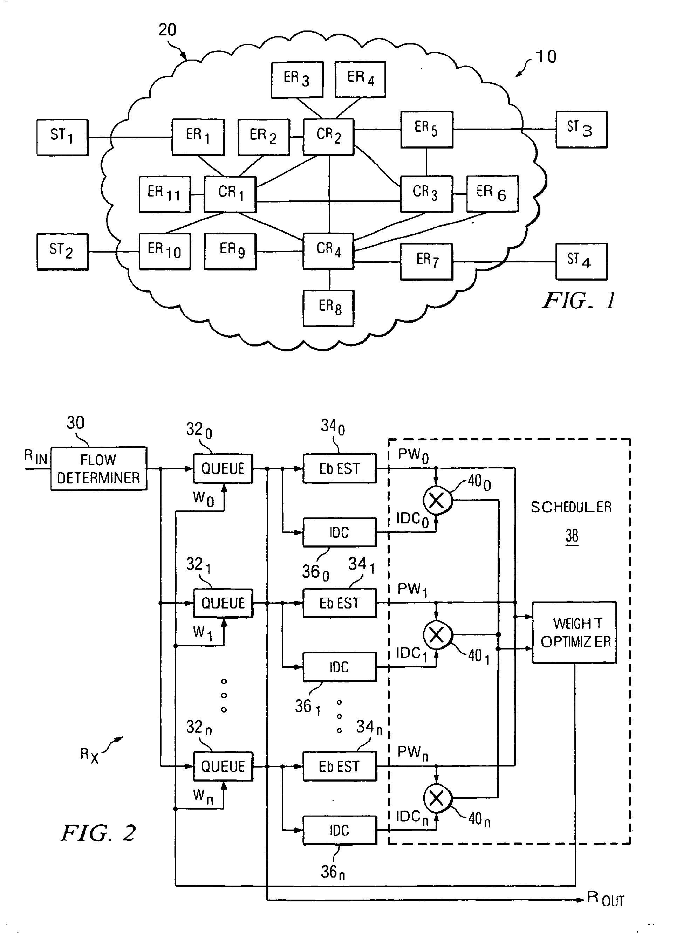

Figure 1 illustrates a block diagram of a system 10 into which the preferred embodiments may be implemented. By way of introduction, Figure 1 is a functional and logical illustration, that is, it is intended to illustrate the functional operations of a router $R_x$ as well as some of its logical connections, where in certain locations as detailed below actual physical connections are not expressly as shown so as to avoid complicating the data link. Looking then to system 10 in general, it includes a number of stations $ST_1$ through $ST_4$, each coupled to a network 20 via a packet transfer device. The term packet transfer device is used in this document in a general sense to refer to any device, typically implemented as a combination of hardware, software, and firmware, that operates to receive a network packet and to place it in one of a number of queues (or buffers), where thereafter the packet transfer device schedules services for the queued packets so as to access resources and so that the packets are taken from the queues and forwarded on to another link within network 20 and ultimately to another station. Such devices are also sometimes referred to as nodes. In an example where network 20 is an internet protocol ("IP") network such as the global Internet or other IP-using network, then each packet transfer device is typically referred to as a router or a switch. However, one skilled in the art should appreciate that the use of the IP protocol is by way of illustration, and many of the various inventive teachings herein may apply to numerous other protocols and packet transfer devices. In any event, returning to network 20 as an IP network, and also by way of an example, each station $ST_x$ may be constructed and function as one of various different types of computing devices, all capable of communicating according to the IP protocol. Lastly and also by way of example, only four stations $ST_x$ are shown so as to simplify the illustration and example, where in reality each such station may be proximate other stations (not shown) and at a geography located at a considerable distance from the other illustrated stations.

Continuing with Figure 1, and in the example of an IP network, then each packet transfer device along the outer periphery of network 20 is shown as one of edge routers $ER_1$ through $ER_{11}$, while within network 20 each packet transfer device is shown as one of core routers $CR_1$ through $CR_4$. The terms edge router and core router are known in the art and generally relate to the function and relative network location of a router. Typically, edge routers connect to remotely located networks and handle considerably less traffic than core routers. In addition and due in part to the relative amount of traffic handled by core routers, they tend to perform less complex operations on data and instead serve primarily a switching function; in other words, because of the tremendous amount of throughput expected of the core routers, they are typically hardware bound as switching machines and not given the capability to provide operations based on the specific data passing through the router. Indeed, core routers typically do not include much in the way of control mechanisms as there could be 10,000 or more connections in a single trunk. In contrast, edge routers are able to monitor various parameters within data packets encountered by the respective router. In any event, the various routers in Figure 1 are shown merely by way of example, where one skilled in the art will recognize that a typical network may include quite a different number of both types of routers. Finally, note that each core router $CR_x$ and each edge router $ER_x$ may be constructed and function according to the art, with the exception that preferably those routers include additional functionality for purposes of traffic routing based on quality of service as considered in packet effective bandwidth, arrival variance, and mean, as described later.

Completing the discussion of Figure 1, note that the various stations, edge routers, and core routers therein are shown connected to one another in various fashions and also by way of example. Generally characterizing the connections of Figure 1, note that each station $ST_x$ is shown connected to a single edge router $ER_x$, where that edge router $ER_x$ is connected to one or more core routers $CR_x$. The core routers $CR_x$, also by way of example, are shown connected to multiple ones of the other core routers $CR_x$. By way of reference, the following Table 1 identifies each node (i.e., station or router) shown in Figure 1 as well as the other device(s) to which each is connected.

Table 1

| station or router | connected nodes |
|---|---|
| $ST_1$ | $ER_1$ |
| $ST_2$ | $ER_{10}$ |
| $ST_3$ | $ER_5$ |
| $ST_4$ | $ER_7$ |
| $ER_1$ | $ST_1$; $CR_1$ |
| $ER_2$ | $CR_1$; $CR_2$ |
| $ER_3$ | $CR_2$ |
| $ER_4$ | $CR_2$ |
| $ER_5$ | $ST_3$; $CR_2$; $CR_3$ |
| $ER_6$ | $CR_3$; $CR_4$ |
| $ER_7$ | $ST_4$; $CR_4$ |
| $ER_8$ | $CR_4$ |
| $ER_9$ | $CR_4$ |
| $ER_{10}$ | $ST_2$; $CR_1$ |
| $ER_{11}$ | $CR_1$ |
| $CR_1$ | $ER_1$; $ER_2$; $ER_{11}$; $ER_{10}$; $ER_2$; $CR_2$; $CR_3$; $CR_4$ |
| $CR_2$ | $ER_2$; $ER_3$; $ER_4$; $CR_1$; $CR_3$; $CR_4$; $ER_5$ |
| $CR_3$ | $ER_5$; $ER_6$; $CR_2$; $CR_1$; $CR_4$ |
| $CR_4$ | $ER_7$; $ER_8$; $ER_9$; $CR_1$; $CR_2$; $CR_3$; $ER_6$ |

Given the various connections as also set forth in Table 1, in general IP packets flow along the various illustrated paths of network 20, and in groups or in their entirety such packets are often referred to as network traffic. In this regard and as developed below, the preferred embodiments operate such that each router may schedule which packets from the router are transmitted at a given time, in accordance with QoS as well as other considerations.

Figure 2 illustrates a functional block diagram of certain of the functionality in each router $R_x$ of Figure 1, that is, Figure 2 may be preferably implemented in either or both of edge routers $ER_x$ and core routers $CR_x$ of Figure 1. Note also that the illustration of Figure 2 includes only those blocks deemed helpful in discussing the preferred embodiments, with the further understanding that additional functionally may be applied to any of routers $R_x$ so as to support other known or developed functions provided by a router. Turning then to Figure 2, router $R_x$ includes an input $R_{IN}$ along which packets are received from network 20, where input $R_{IN}$ thereby represents the physical link connection to the network as well as any associated logical aspects, such as ports or the like. A packet received at input $R_{IN}$ is coupled to an input $30_{IN}$ of a flow determiner 30. An output $30_{OUT}$ of flow determiner 30 is connected to provide a received packet to any one of a number $n+1$ packet queues $32_0$ through $32_n$. In a preferred embodiment, each queue $32_x$ is a first-in-first-out device and may be constructed according to known principles. The output of each queue $32_x$ is logically connected to provide each packet to two respective blocks; in practice, the physical connection in this regard may be made by providing a copy of each packet that is input to a queue $32_x$ also to the two blocks now described, where providing packet copies in this manner allows the true data link through a queue and to the ultimate router output, $R_{OUT}$, to remain undisturbed so that such traffic may be forwarded directly to a switching matrix (not shown). Looking then to the logical connection of packets from each queue $32_x$ to two respective blocks, first, the queue output is logically connected to an effective bandwidth ("Eb") estimator $34_x$, which estimates a value, $Eb$, and which as detailed below also produces a corresponding preliminary weight $PW_x$. Second, the queue output is logically connected to an index dispersion for counts ("IDC") determiner $36_x$, which determines a corresponding value $IDC_x$. The outputs, $PW_x$ and $IDC_x$, of each pairing of an Eb estimator $34_x$ and IDC determiner $36_x$ are connected to a scheduler 38, which represents a logical control function for purposes of scheduling packet service in the various queues $32_0$ through $32_n$ as appreciated in the remainder of this document. Further, and for reasons more clear below, within scheduler 38, the outputs, $PW_x$ and $IDC_x$, of each pairing of an Eb estimator $34_x$ and IDC determiner $36_x$ are connected to a respective multiplier $40_x$. The product produced by

each of multipliers $40_0$ through $40_n$ is connected to a weight optimizer 42, as is the value of each preliminary weight $PW_x$. As detailed later, weight optimizer 42 represents a potential adjustment to any of the preliminary weights $PW_0$ through $PW_n$ to determine final respective weights $W_0$ through $W_n$. These final weights are then used to schedule the priority of packet service for the packets in queues $32_0$ through $32_n$; in other words, weight $W_0$ is associated with determining when the packets in queue $32_0$ are transmitted, weight $W_1$ is associated with determining when the packets in queue $32_1$ are transmitted, and so forth through $W_n$ being associated with determining when the packets in queue $32_n$ are transmitted, where each of the transmissions are thus taken from the output of a respective queue $32_x$ to output $R_{OUT}$ of router $R_x$. Note also that each weight $W_x$ may be said to be associated with a so-called service grant for the respective queue $32_x$, where such a grant thereby includes priority, scheduled time, or resources associated with the queue, depending on a specific implementation.

The operation of router $R_x$ is now described, beginning with flow determiner 30. Flow determiner 30 receives each incoming packet and determines, from a set of criteria, to which one of multiple different flows the packet belong. Further, for each packet that satisfies a same criterion or criteria, it is routed by flow determiner to a corresponding one of queues $32_0$ through $32_n$. As a result, each queue $32_x$ stores packets of a same flow. The criteria evaluated by flow determiner 30 may be based on various different considerations. For example, the criteria may be based on the source and destination address included in the packet. For example with reference to Figure 1, consider the case of core router $CR_1$ as a router $R_x$ in Figure 2, and consider further that flow determiner 30 of core router $CR_1$ has three sets of source/destination addresses corresponding to three different respective queues $32_0$, $32_1$, and $32_2$. Also in this example, assume that the first set of source/destination addresses is from station $ST_1$ to station $ST_2$, the second set of source/destination addresses is from station $ST_1$ to station $ST_3$, and the third set of source/destination addresses is from station $ST_1$ to station $ST_4$. Thus, when flow determiner 30 of core router $CR_1$ receives a packet with a source address of $ST_1$ and a destination address of $ST_2$, then flow determiner 30 causes that packet to be stored in queue $32_0$. Also therefore in this example, when flow determiner 30 of core router $CR_1$ receives a packet with a source address of $ST_1$ and a destination address of $ST_3$, then flow determiner 30 causes that packet to be stored in queue $32_1$. Finally, when flow determiner 30 of core router $CR_1$ receives a packet with a source address of $ST_1$ and a destination address of $ST_4$, then flow determiner 30 causes that packet to be stored in queue $32_2$. Note that source and destination addresses are only provided by way of example, where in the preferred embodiment the criteria may be directed to other aspects set forth in the packet header, including by ways of example the protocol field, type of service ("TOS") field, or source/destination port numbers. Moreover, packet attributes about each packet other than that specified in the packet header also may be considered by flow determiner 30. For example, the physical input ports or interfaces connected to other routers may be used by flow determiner 30 as the criteria. In this case and as an instance of this example with reference also to Figure 1, when flow determiner 30 of core router $CR_1$ receives a packet from edge router $ER_1$, then flow determiner 30 could cause that packet to be stored in queue $32_0$, whereas also in this example, when flow determiner 30 of core router $CR_1$ receives a packet from edge router $ER_2$, then flow determiner 30 could cause that packet to be stored in queue $32_1$.

As a packet is received in a queue $32_x$, certain attributes of the packet are also available to the respective Eb estimator $34_x$ and IDC determiner $36_x$. From these attributes, Eb estimator $34_x$ estimates the effective bandwidth, $Eb$, for the packet and IDC determiner $36_x$ determines the value of $IDC$ for the packet. The determination of each of these values is discussed below.

Looking now in greater detail to Eb estimator $34_x$ and its estimation of effective bandwidth, $Eb$, the effective bandwidth for a traffic stream is the minimum bandwidth required for carrying that traffic, subject to meeting QoS requirements. In this regard, and in the context of Figure 2, as a packet arrives its QoS, or the QoS associated with its respective queue $32_x$, is available to the respective Eb estimator $34_x$. Note that in some instances, the QoS requirements of the traffic are reduced to the condition that a given queue overflow probability not be exceeded. Further, in making these adjustments to QoS, statistical properties of the traffic stream are preferably considered as well as system parameters (e.g., queue size and service discipline) and the traffic mix. Lastly, note that the terms of equivalent bandwidth or equivalent capacity are often used as synonyms for effective bandwidth.

Given the preceding, a mathematical framework for determining a value of effective bandwidth, $Eb$, has been defined based on the general expression shown in the following Equation 1, and is noteworthy here insofar as it provides an understanding of the functionality provided by each Eb estimator $32_x$ in Figure 2:

$$Eb(s,t) = \frac{1}{st} \cdot \log E\left[e^{(s \cdot A_t)}\right] \qquad \text{Equation 1}$$

In Equation 1, the effective bandwidth is shown as $Eb(s,t)$ to reflect the fact that it relates to variables $s$ and $t$. In this regard, $A_t$ is the amount of incoming work in duration of $t$. The values of $(s, t)$ are the so-called space and time parameters, respectively, which characterize the operating point at the router link and depend on the context of the stream (i.e., link resources and the characteristics of the multiplexed traffic). The space parameter s shows the degree of statistical traffic multiplexing or "mix" of the link and the degree of QoS requirements. In this regard, often *s* tends toward infinity, which corresponds to the case of deterministic multiplexing (i.e., zero probability of overflow), but that case cannot be assumed. If QoS requirements are relaxed, or if the degree of multiplexing increases, s tends to zero and the effective bandwidth, *Eb*, approaches the mean rate. If QoS requirements are more constrained, or if the degree of multiplexing decreases, *s* tends to infinity and effective bandwidth, *Eb*, of the source approaches the maximum rate of $max(A_t)/t$, measured over the interval *t*. Note also that the time parameter t corresponds to the most probable duration of buffer busy period prior to overflow.

The effective bandwidth for various types of traffic models has been derived from the relationship set forth in Equation 1, where examples of such models appear in the following papers: (1) C. Courcoubetis and R. Weber, "Buffer overflow asymptotics for a buffer handling many traffic sources," J. Appl. Prob., vol. 33, pp. 886-903, 1996; (2) G. Kesidis, J. Walrand, and C. S. Chang, "Effective bandwidths for multiclass markov fluids and other ATM sources," IEEE Trans. Network, vol. 1, no. 4, pp. 424-428, Aug. 1993; (3) C. Courcoubetis, V. A. Siris, and G. Stamoulis, "Application of the many sources asymptotic and effective bandwidths to traffic engineering,"Telecommunication Systems, vol. 12, no. 2-3, pp. 167-191, 1999; and (4) R. Gibbens and P. Hunt, "Effective bandwidths for the multi-type uas channel," Queuing Systems, vol. 9, pp. 17-28, 1991. However, unlike the estimation of observable parameters such as mean and variance, the space parameter s parameter cannot be directly estimated from measurements. Accordingly, some effective bandwidths algorithms calculate the space parameter s by using Large Deviations Theory ("LDT") and by making a large buffer assumption. LDT deals with rare event probabilities and is suitably applied to the effective bandwidth determination since loss probability constraints to be satisfied are very small.

Note further that other manners exist in the art for estimating effective bandwidth, and those also may be implemented in connection with the preferred embodiment. For example, with space and time parameter estimation being a possible difficulty in the previously mentioned algorithms, *Norros* suggested a different approach to estimate effective bandwidth. This approach does not rely on large deviation theory and it addresses long-range dependent traffic type. This approach is based on the queue analysis of a server with Fractional Brownian Motion ("FBM") input traffic. The main issue in this method is the FBM parameter estimation. The robust and feasible wavelet based H estimator suits in this method, where "H" is the Hurst parameter, a parameter used to measure the degree of self-similarity behavior on the underlying traffic. In any event, effective bandwidth estimation may be implemented from the above discussion as well as other alternatives and information ascertainable by one skilled in the art.

As introduced earlier, once an Eb estimator $34_x$ determines a value for effective bandwidth, $Eb_x$, then the estimator $34_x$ also determines a respective preliminary weight, $PW_x$. More particularly, in the preferred embodiment, for a determined value of effective bandwidth, $Eb_x$, its respective preliminary weight, $PW_x$, is as shown in the following Equation 2:

$$PW_x = \frac{Eb_x}{B} \qquad \text{Equation 2}$$

In Equation 2, *B* is the total bandwidth available to the router $R_x$. Thus, the preliminary weight is the ratio of effective bandwidth to total bandwidth. However, in the preferred embodiment and as detailed further below, from each preliminary weight a final and respective weight, $W_x$, is determined by weight optimizer 42, and the value of $W_x$ may be adjusted upward above with respect to the respective value $PW_x$ based on two additional consideration, detailed later.

Looking now in greater detail to IDC determiner $36_x$ and its determination of a corresponding value $IDC_x$, as each packet arrives in a queue $32_x$, sufficient packet arrival time corresponding to that packet are stored by the respective IDC determiner $36_x$ so as to determine the respective value, $IDC_x$. Particularly, the IDC has heretofore been proposed to be used to characterize packet burstiness in an effort to model Internet traffic, whereas in contrast, in the present inventive scope IDC is instead combined with the other attributes described herein to apply weights to packet queues for purposes of scheduling traffic.

By way of background, in the prior art, in a document entitled "Characterizing The Variability of Arrival Processes with Index Of Dispersion," (IEEE, Vol. 9, No. 2, Feb. 1991) by Riccardo Gusella, there is discussion of using the IDC, which provides a measure of burstiness, so that a model may be described for Internet traffic. Currently in the art, there is much debate about identifying the type of model, whether existing or newly-developed, which will adequately describe Internet traffic. In the referenced document, IDC, as a measure of burstiness, is suggested for use in creating such a model. IDC is defined as the variance of the number of packet arrivals in an interval of length t divided by the mean number of packet arrivals in t. For example, assume that a given network router has an anticipation (i.e., a baseline) of receiving 20 packets per second ("pps"), and assume further that in five consecutive seconds this router receives 30 packets in second 1, 10 packets in second 2, 30 packets in second 3, 15 packets in second 4, and 15 packets in second 5. Thus, over the five seconds, the router receives 100 packets; on average, therefore, the router receives 20 packets per second, that is, the average receipt per second equals the anticipated baseline of 20 pps. However, for each individual second, there is a non-zero variance in the amount of packets received from the anticipated value of 20 pps. For example, in second 1, the variance is +10, in second 2 the variance is -10, and so forth. As such, the IDC provides a measure that reflects this variance, in the form of a ratio compared to its mean, and due to the considerable fluctuation of the receiving rate per second over the five second interval, there is perceived to be considerable burstiness in the received packets, where the prior art describes an attempt to compile a model of this burstiness so as to model Internet traffic.

Also in connection with IDC, note that the interval, *t*, for the present discussion of IDC may be different from the time parameter, *t*, discussed above for effective bandwidth *Eb*, and they are not necessarily related. There are various prior art papers that attempt to identify an optimal "*t*" in *Eb* in the real cases. However, in a preferred embodiment, it may be desirable to align the time interval, *t*, of IDC with the time parameter, *t*, of effective bandwidth since scheduling is based on both *Eb* and IDC, although this is not necessarily the case. For example, the time parameter, *t*, in *Eb* can be specified as 2 seconds and the time interval, *t*, in IDC may be 10 seconds; alternatively, both times can be the same as well if the time scale works in both *Eb* and IDC.

Continuing with an examination of IDC determiner $36_x$, attention is now directed to its actual operation in determining the IDC value for a given packet. Recalling that the IDC is defined as the variance of the number of packet arrivals in an interval of length *t* divided by the mean number of packet arrivals in *t*, it may be written as shown in the following Equation 3:

$$IDC_t = \frac{\text{var}(N_t)}{E(N_t)} \qquad \text{Equation 3}$$

In Equation 3, $N_t$ indicates the number of arrivals in an interval of length *t*. In the preferred embodiment and for estimating the IDC of measured arrival processes, only considered are the time at discrete, equally spaced instants $\tau_i (i \geq 0)$. Further, letting $c_i$ indicate the number of arrivals in the time interval $\tau_i - \tau_{i-1}$, then the following Equation 4 may be stated:

$$IDC_n = \frac{\text{var}(\sum_{i=1}^{n} c_i)}{E(\sum_{i=1}^{n} c_i)} = \frac{\text{var}(c_1 + c_2 + \cdots + c_n)}{E(c_1 + c_2 + \cdots + c_n)} = \frac{n \cdot \text{var}(c_\tau) + 2\sum_{j=1}^{n-1}\sum_{k=1}^{n-j} \text{cov}(c_j, c_{j+k})}{n \cdot E(c_\tau)} \qquad \text{Equation 4}$$

In Equation 4, $\text{var}(c_\tau)$ and $E(c_\tau)$ are the common variance and mean of $c_i$, respectively, thereby assuming implicitly that the processes under consideration are at least weakly stationary, that is, that their first and second moments are time invariant, and that the auto-covariance series depends only on the distance *k*, the lag, between samples: $\text{cov}(c_i, c_{i+k}) = \text{cov}(c_j, c_{j+k})$, for all *i, j,* and *k*.

Further in view of Equations 3 and 4, consider the following Equation 5:

$$\sum_{j=1}^{n-1}\sum_{k=1}^{n-j} \text{cov}(c_j, c_{j+k}) = \text{sum of} \begin{cases} j=1, & \text{cov}(1)+\text{cov}(2)+\cdots+\text{cov}(n-2)+\text{cov}(n-1) \\ j=2, & \text{cov}(1)+\text{cov}(2)+\cdots+\text{cov}(n-2) \\ \vdots & \vdots \\ j=n-2, & \text{cov}(1)+\text{cov}(2) \\ j=n-1, & \text{cov}(1) \end{cases}$$

$$= \sum_{j=1}^{n-1}(n-j)\text{cov}(j) \qquad \text{Equation 5}$$

Further, for the auto-correlation coefficient $\xi_{i,j+k}$, it may be stated as in the following Equation 6:

$$\xi_{i,i+k} = \xi_k = \frac{\mathrm{cov}(c_i, c_{i+k})}{\sqrt{\mathrm{var}(c_i)}\sqrt{\mathrm{var}(c_{i+k})}} = \frac{\mathrm{cov}(k)}{\mathrm{cov}(c_r)} \qquad \text{Equation 6}$$

Then from Equation 6, the following Equation 7 may be written:

$$I_n = \frac{n \cdot \mathrm{var}(c_r) + 2\sum_{j=1}^{n-1}\sum_{k=1}^{n-j}\mathrm{cov}(c_j, c_{j+k})}{n \cdot E(c_r)} = \frac{\mathrm{var}(c_r)}{E(c_r)}\left[1 + 2\sum_{j=1}^{n-1}\frac{n-j}{n}\xi_j\right]$$

$$= \frac{\mathrm{var}(c_r)}{E(c_r)}\left[1 + 2\sum_{j=1}^{n-1}\left(1 - \frac{j}{n}\right)\xi_j\right] \text{ by using } \mathrm{cov}(k) = \xi_k \cdot \mathrm{var}(c_r) \quad \text{Equation 7}$$

Finally, therefore, the unbiased estimate of $E(c_r)$, $\mathrm{var}(c_r)$, and $\xi_j$ are as shown in the following respective Equations 8 through 10:

$$E(c_r) = \frac{1}{n}\sum_{i=1}^{n}c_i \qquad \text{Equation 8}$$

$$\mathrm{var}(c_r) = \frac{1}{n-1}\sum_{i=1}^{n}\left(c_i - E(c_r)\right)^2 \qquad \text{Equation 9}$$

$$\xi_j = \frac{\mathrm{cov}(j)}{\mathrm{var}(c_r)} = \frac{\frac{1}{n-j}\sum_{i=1}^{n-j}\left(c_i - E(c_r)\right)\left(c_{i+j} - E(c_r)\right)}{\mathrm{var}(c_r)} \qquad \text{Equation 10}$$

Thus, the IDC may be determined by the preferred embodiment using the above Equations 8 and 9, and further in view of Equation 10.

Having demonstrated various alternatives for preferred embodiment determination of the preliminary weight $PW_x$ and the respective value of $IDC_x$, recall that each of these values provides a multiplicand into a respective multiplier $40_x$, with the product output being connected to weight optimizer 42, which also receives the value of each preliminary weight, $PW_x$. Given these connections, in the preferred embodiment, weight optimizer 42 is operable to determine, for each preliminary weight, $PW_x$, a corresponding final weight, $W_x$. Specifically, these corresponding final weights are determined from the constraints imposed by the following Equations 11, 12, and 13:

$$W_x \geq \left(PW_x = \frac{Eb_x}{B}\right) \qquad \text{Equation 11}$$

$$\sum_{x=0}^{n}W_x = 1 \qquad \text{Equation 12}$$

$$\min \sum_{x=0}^{n} W_x * IDC_x \qquad\qquad \text{Equation 13}$$

Equation 11 demonstrates that for each preliminary weight value, $PW_x$, its corresponding final weight value, $W_x$, is equal to or exceeds the preliminary weight value, $PW_x$. Further, Equation 12 demonstrates that all final weight values combined should total a value of one. Lastly, Equation 13 solves an objective function, that is, each final weight value, $W_x$, is adjusted so that the summation of Equation 13 is minimized. This latter constraint therefore is such that by minimizing an objective function from the overall traffic burstiness, each value $W_x$ is determined so as to fairly allocate the bandwidth weight to smooth the bursty traffic without compromising the QoS requirements. Given the final weight values $\{W_0, W_1, ..., W_n\}$, weight optimizer 42 outputs those as part of scheduler 38, to control respective queues $32_0$ through $32_n$. In other words, each queue $32_x$ is then serviced in priority as defined by its corresponding final weight, $W_x$. Accordingly, scheduling of resource access and packet transmission is thereby weighted according to these values and, thus, this more fairly allocates bandwidth while smoothing burstiness and taking into consideration QoS requirements.

The following features and combinations of features may constitute further embodiments of the described or claimed invention:

- The described or claimed system wherein the network comprises an internet protocol network;

- The described or claimed system wherein the internet protocol network comprises the global internet;

- The described or claimed system wherein each node of the plurality of nodes is selected from a set consisting of a router and a switch;

- The described or claimed system wherein each node of the plurality of nodes is selected from a set consisting of an edge router and a core router;

- The described or claimed system wherein each weight responds to the effective bandwidth $Eb$ by being greater than or equal to a ratio of the effective bandwidth $Eb$ to a total bandwidth available to the node; and wherein a total for all weights for all queues in the plurality of queues equals one;

- A method of operating a node in a plurality of nodes in a network system, wherein each node in the plurality of nodes is coupled to communicate with at least one other node in the plurality of nodes, the method comprising receiving a plurality of packets; for each received packet in the plurality of packets, coupling the received packet into a selected queue in a plurality of queues in the node, wherein a respective selected queue is selected in response to the respective received packet satisfying one or more criteria; and assigning a weight to each respective queues in the plurality of queues, wherein each weight assigned to a respective queue in the plurality of queues is responsive to quality requirements for each packet in the respective queue and to a ratio of packet arrival variance in the respective queue and a mean of packets arriving to be stored in the respective queue during a time interval;

- The described method wherein, for the assigning step: the weight assigned to the respective queue comprises a weight $W_x$; the ratio for a respective queue comprises a value $IDC_x$; and wherein each weight in the plurality of weights is optimized in response to minimizing a sum of a product of each weight $W_x$ with its respective value $IDC_x$;

- The described method further comprising the step of scheduling transmission of packets from each queue of the plurality of queues in response to a respective weight, from the plurality of weights, assigned to the queue;

- The described method wherein each received packet comprises an IP packet and wherein the quality requirements comprise QoS;

- The described method wherein each weight is responsive to quality requirements by responding to effective bandwidth $Eb$; wherein $Eb$ is defined as: $Eb = \dfrac{1}{st} \cdot \log \mathrm{E}\left[e^{(s \cdot A_t)}\right]$; wherein $A_t$ is an amount of incoming work in duration of $t$; and wherein $(s, t)$ are space and time parameters, respectively, which characterize an operating point at a link to the node;

- The described method wherein each weight is responsive to quality requirements by responding to effective bandwidth *Eb;* wherein *Eb* is defined as: $Eb = \dfrac{1}{st} \cdot \log \mathrm{E}\left[e^{(s \cdot A_t)}\right];$ wherein $A_t$ is an amount of incoming work in duration of *t*; and wherein *(s,* t) are space and time parameters, respectively, which characterize an operating point at a link to the node;

- The described method wherein each weight responds to the effective bandwidth *Eb* by being greater than or equal to a ratio of the effective bandwidth *Eb* to a total bandwidth available to the node; and wherein a total for all weights for all queues in the plurality of queues equals one.

From the above illustrations and description, one skilled in the art should appreciate that the preferred embodiments provide a computer network with routers or switches configured to schedule traffic according to a dynamic fair mechanism in response to quality of service and an index dispersion of counts. The embodiments provide numerous benefits over the prior art. As one example, as compared to static mechanisms, the preferred embodiments dynamically schedule link bandwidth based on real-time traffic measurements. In addition, unlike various dynamic algorithms, which simply allocate excess bandwidth according to the number of flows in a specific class of service or the pre-defined committed information rates, the preferred embodiment considers the actual on-line traffic burstiness, as measured in IDC, as an objective function. As still another example, the preferred embodiments also take advantage of effective bandwidth as the lower bound, which guarantees the QoS requirements for the high priority traffic flows or classes can be always satisfied during the optimization. As yet another benefit, in the preferred embodiments, excess bandwidth of a flow or a class of flows is not only reused by that flow or class but is allocated to other flows or classes as well. Further, by designating the lower bound for the flows having little QoS requirements such as Best-Effort traffic, these flows can also capture the least bandwidth so that the fairness for the excess bandwidth allocation can be achieved. Note that these preferred embodiments and benefits can be well applied in the DiffServ environment because in that context the classes of traffic flows are the primary targets instead of individual flows so that there are less scalability issues. As a final benefit, while the preferred embodiments have been described in connection with an IP network, they also may be applied to any network that is cell or packet based.

Given the above, it will be further appreciated that while the present embodiments have been described in detail, various substitutions, modifications or alterations could be made to the descriptions set forth above without departing from the inventive scope which is defined by the following claims.

**Claims**

1. A network system, comprising:

 a plurality of nodes;
 wherein each node in the plurality of nodes is coupled to communicate with at least one other node in the plurality of nodes; and
 wherein each node of the plurality of nodes comprises a plurality of queues (32) and is operable to perform the steps of:

  receiving a plurality of packets; and
  for each received packet in the plurality of packets, coupling the received packet into a selected queue in the plurality of queues, wherein a respective selected queue is selected in response to the respective received packet satisfying one or more criteria;

 **characterized in that** each node of the plurality of nodes further comprises:

  means for assigning a weight, W, to each respective queue in the plurality of queues,

 wherein each weight assigned to a respective queue in the plurality of queues is responsive to quality requirements for each packet in the respective queue and to a ratio, IDC, of packet arrival variance in the respective queue and a mean of packets arriving to be stored in the respective queue during a time interval, and
 wherein each weight in the plurality of weights is optimized in response to minimizing a sum of the products of each weight with its respective ratio.

**2.** The system of claim 1 wherein each node of the plurality of nodes is further operable to perform the step of scheduling transmission of packets from each queue of the plurality of queues in response to the respective weight, from the plurality of weights, assigned to the queue.

**3.** The system of claim 1 wherein each received packet comprises an IP packet and wherein the quality requirements comprise QoS.

**4.** The system of claim 1:

wherein each packet in the plurality of packets comprises a respective packet header; and
wherein the one or more criteria are evaluated relative to information in the packet header.

**5.** The system of claim 4 wherein the one or more criteria are selected from a set consisting of source address, destination address, protocol field, type of service field, and source/destination port numbers.

**6.** A method of operating a node in a plurality of nodes in a network system, wherein each node in the plurality of nodes is coupled to communicate with at least one other node in the plurality of nodes, the method comprising the steps of:

receiving a plurality of packets; and
for each received packet in the plurality of packets, coupling the received packet into a selected queue (32) in a plurality of queues in the node, wherein a respective selected queue is selected in response to the respective received packet satisfying one or more criteria;
**characterized by** the steps of:

assigning a weighty, W, to each respective queue in the plurality of queues,

wherein each weight assigned to a respective queue in the plurality of queues is responsive to quality requirements for each packet in the respective queue and to a ratio, IDC, of packet arrival variance in the respective queue and a mean of packets arriving to be stored in the respective queue during a time interval, and
wherein each weight in the plurality of weights is optimized in response to minimizing a sum of the products of each weight with its respective ratio.

**7.** The method of claim 6 further comprising the step of scheduling transmission of packets from each queue of the plurality of queues in response to the respective weight, from the plurality of weights, assigned to the queue.

**8.** The method of claim 6 wherein each received packet comprises an IP packet and wherein the quality requirements comprise QoS.

**9.** The method of claim 6 wherein each weight responds to an effective bandwidth, $Eb$, by being greater than or equal to a ratio of the effective bandwidth, $Eb$, to a total bandwidth, B, available to the node.

**10.** The method of claim 6 wherein a total for all weights for all queues in the plurality of queues equals one.

**Patentansprüche**

**1.** Ein Netzwerksystem, umfassend:

Eine Vielzahl von Knoten;
wobei jeder Knoten in der Vielzahl von Knoten gekoppelt ist, um mit mindestens einem anderen Knoten in der Vielzahl von Knoten zu kommunizieren; und
wobei jeder Knoten der Vielzahl von Knoten eine Vielzahl von Warteschleifen (32) umfasst und fähig ist, folgende Schritte auszuführen:

Empfangen einer Vielzahl von Paketen; und
für jedes empfangene Paket in der Vielzahl von Paketen, Koppeln des empfangenen Pakets in eine ausgewählte Warteschleife in der Vielzahl von Warteschleifen, wobei, wenn das entsprechende empfangene Paket einem Kriterium oder mehreren Kriterien entspricht, eine entsprechende ausgewählte Warteschleife ausgewählt wird;

**dadurch gekennzeichnet, dass** jeder Knoten der Vielzahl von Knoten weiterhin umfasst:

Mittel zum Zuweisen eines Gewichts, W, an jede entsprechende Warteschleife in der Vielzahl von Warteschleifen,

wobei jedes einer entsprechenden Warteschleife in der Vielzahl von Warteschleifen zugewiesene Gewicht eine Reaktion auf Qualitätsanforderungen für jedes Paket in der entsprechenden Warteschleife und auf eine Ratio, IDC, zwischen der Varianz der Ankunft von Paketen in der entsprechenden Warteschleife und einem Mittelwert von ankommenden Paketen, welche in der entsprechenden Warteschleife während eines Zeitintervalls zu speichern sind, ist, und
wobei jedes Gewicht in der Vielzahl von Gewichten als Reaktion auf das Minimieren einer Summe von Produkten eines jeden Gewichts mit seiner entsprechenden Ratio optimiert wird.

2.  Das System nach Anspruch 1, wobei jeder Knoten der Vielzahl von Knoten weiterhin fähig ist, den Schritt der Ablauffolgesteuerung der Übertragung von Paketen aus jeder Warteschleife der Vielzahl von Warteschleifen als Reaktion auf das entsprechende, der Warteschleife zugewiesene Gewicht aus der Vielzahl von Gewichten auszuführen.

3.  Das System nach Anspruch 1, wobei jedes empfangene Paket ein IP-Pakat enthält, und wobei die Qualitätsanforderungen die Dienstgüte (QoS) umfassen.

4.  Das System nach Anspruch 1:

wobei jedes Paket in der Vielzahl von Paketen einen entsprechenden Paket-Header enthält; und
wobei das eine Kriterium oder die mehreren Kriterien in Bezug auf die Informationen im Paket-Header bewertet werden.

5.  Das System nach Anspruch 4, wobei das eine Kriterium oder die mehreren Kriterien aus einem Satz bestehend aus Quelladresse, Zieladresse, Protokollfeld, Typ des Dienstfelds und Quell-/Zielportnummern ausgewählt werden.

6.  Ein Verfahren zum Steuern eines Knotens in einer Vielzahl von Knoten in einem Netzwerksystem, wobei jeder Knoten in der Vielzahl von Knoten gekoppelt ist, um mit mindestens einem anderen Knoten in der Vielzahl von Knoten zu kommunizieren, wobei das Verfahren folgende Schritte umfasst:

Empfangen einer Vielzahl von Paketen; und
für jedes empfangene Paket In der Vielzahl von Paketen, Koppeln des empfangenen Pakets in eine ausgewählte Warteschleife (32) in einer Vielzahl von Warteschleifen in dem Knoten, wobei, wenn das entsprechende empfangene Paket einem Kriterium oder mehreren Kriterien entspricht, eine entsprechende ausgewählte Warteschleife ausgewählt wird;
**gekennzeichnet durch** folgende Schritte:

Zuweisen eines Gewichts, W, an jede entsprechende Warteschleife in der Vielzahl von Warteschleifen,

wobei jedes einer entsprechenden Warteschleife in der Vielzahl von Warteschleifen zugewiesene Gewicht eine Reaktion auf die Qualitätsanforderungen für jedes Paket in der entsprechenden Warteschleife und auf eine Ratio, IDC, zwischen der Varianz der Ankunft von Paketen in der entsprechenden Warteschleife und einem Mittelwert von ankommenden Paketen, welche in der entsprechenden Warteschleife während eines Zeitintervalls zu speichern sind, ist, und
wobei jedes Gewicht in der Vielzahl von Gewichten als Reaktion auf das Minimieren einer Summe von Produkten eines jeden Gewichts mit seiner entsprechenden Ratio optimiert wird.

7.  Das Verfahren nach Anspruch 6, weiterhin umfassend den Schritt der Ablauffolgesteuerung der Übertragung von Paketen aus jeder Warteschleife der Vielzahl von Warteschleifen als Reaktion auf das entsprechende, der Warteschleife zugewiesene Gewicht aus der Vielzahl von Gewichten.

8.  Das Verfahren nach Anspruch 6, wobei jedes empfangene Paket ein IP-Paket enthält, und wobei die Qualitätsanforderungen die Dienstgüte (QoS) umfassen.

9. Das Verfahren nach Anspruch 6, wobei jedes Gewicht **dadurch**, dass es größer als oder gleich einer Ratio zwischen der effektiven Bandbreite, Eb, und einer für den Knoten verfügbaren Gesamtbandbreite, B, eine Reaktion auf eine effektive Bandbreite, Eb, ist.

10. Das Verfahren nach Anspruch 6, wobei eine Gesamtsumme für alle Gewichte für alle Warteschleifen in der Vielzahl von Warteschleifen gleich eins ist.

**Revendications**

1. Système de réseau, comprenant :

   une pluralité de noeuds;
   dans lequel chaque noeud de la pluralité de noeuds est couplé pour communiquer avec au moins un autre noeud de la pluralité de noeuds ; et
   dans lequel chaque noeud de la pluralité de noeuds comprend une pluralité de files d'attente (32) et peut fonctionner pour exécuter les étapes suivantes :

      réception d'une pluralité de paquets ; et
      pour chaque paquet reçu de la pluralité de paquets, couplage du paquet reçu dans une file d'attente sélectionnée dans la pluralité de files d'attente, dans lequel une file d'attente sélectionnée respective est sélectionnée en réponse au paquet reçu respectif satisfaisant à un ou plusieurs critères;

      **caractérisé en ce que** chaque noeud de la pluralité de noeuds comprend en outre :
      des moyens d'assignation d'une pondération, W, à chaque file d'attente respective dans la pluralité de files d'attente,
      dans lequel chaque pondération assignée à une file d'attente respective dans la pluralité de files d'attente est sensible à des exigences de qualité pour chaque paquet dans la file d'attente respective et à un rapport, IDC, d'écart d'arrivée de paquet dans la file d'attente respective sur une moyenne de paquets arrivant à stocker dans la file d'attente respective pendant un intervalle temporel, et
      dans lequel chaque pondération de la pluralité de pondérations est optimisée en réponse à la minimisation d'une somme des produits de chaque pondération et de son rapport respectif.

2. Système selon la revendication 1, dans lequel chaque noeud de la pluralité de noeuds peut en outre fonctionner pour exécuter l'étape d'ordonnancement de la transmission de paquets depuis chaque file d'attente de la pluralité de files d'attente en réponse à la pondération respective de la pluralité de pondérations, assignée à la file d'attente.

3. Système selon la revendication 1, dans lequel chaque paquet reçu comprend un paquet IP et dans lequel les exigences de qualité comprennent une QoS.

4. Système selon la revendication 1,

   dans lequel chaque paquet de la pluralité de paquets comprend un en-tête de paquet respectif ; et
   dans lequel le ou les critères sont évalués par rapport à l'information de l'en-tête de paquet.

5. Système selon la revendication 4, dans lequel le ou les critères sont sélectionnés parmi un ensemble constitué par une adresse source, une adresse de destination, un champ de protocole, un champ de type de service et des numéros de port source/de destination.

6. Procédé de fonctionnement d'un noeud d'une pluralité de noeuds dans un système de réseau, dans lequel chaque noeud de la pluralité de noeuds est couplé pour communiquer avec au moins un autre noeud de la pluralité de noeuds, le procédé comprenant les étapes suivantes :

   réception d'une pluralité de paquets ; et
   pour chaque paquet reçu de la pluralité de paquets, couplage du paquet reçu dans une file d'attente (32) sélectionnée dans la pluralité de files d'attente, dans lequel une file d'attente sélectionnée respective est sélectionnée en réponse au paquet reçu respectif satisfaisant à un ou plusieurs critères ;
**caractérisé par** les étapes suivantes :

assignation d'une pondération, W, à chaque file d'attente respective dans la pluralité de files d'attente,

dans lequel chaque pondération assignée à une file d'attente respective de la pluralité de files d'attente est sensible à des exigences de qualité pour chaque paquet dans la file d'attente respective et à un rapport, IDC, d'écart d'arrivée de paquet dans la file d'attente respective sur une moyenne de paquets arrivant à stocker dans la file d'attente respective pendant un intervalle temporel, et
dans lequel chaque pondération de la pluralité de pondérations est optimisée en réponse à la minimisation d'une somme des produits de chaque pondération et de son rapport respectif.

7. Procédé selon la revendication 6, comprenant en outre l'étape d'ordonnancement de la transmission de paquets depuis chaque file d'attente de la pluralité de files d'attente en réponse à la pondération respective de la pluralité de pondérations, assignée à la file d'attente.

8. Procédé selon la revendication 6, dans lequel chaque paquet reçu comprend un paquet IP et dans lequel les exigences de qualité comprennent une QoS.

9. Procédé selon la revendication 6, dans lequel chaque pondération répond à une bande passante effective, $Eb$, en étant supérieure ou égale à un rapport de la bande passante effective, $Eb$, sur une bande passante totale, B, disponible pour le noeud.

10. Procédé selon la revendication 6, dans lequel un total de toutes les pondérations pour toutes les files d'attente de la pluralité de files d'attente est égal à un.

*FIG. 1*

*FIG. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03084152 A1

**Non-patent literature cited in the description**

- **C. COURCOUBETIS ; R. WEBER.** Buffer overflow asymptotics for a buffer handling many traffic sources. *J. Appl. Prob.,* 1996, vol. 33, 886-903
- **G. KESIDIS ; J. WALRAND ; C. S. CHANG.** Effective bandwidths for multiclass markov fluids and other ATM sources. *IEEE Trans. Network,* August 1993, vol. 1 (4), 424-428
- **C. COURCOUBETIS ; V. A. SIRIS ; G. STA-MOULIS.** Application of the many sources asymptotic and effective bandwidths to traffic engineering. *Telecommunication Systems,* 1999, vol. 12 (2-3), 167-191
- **R. GIBBENS ; P. HUNT.** Effective bandwidths for the multi-type uas channel. *Queuing Systems,* 1991, vol. 9, 17-28
- **RICCARDO GUSELLA.** *Characterizing The Variability of Arrival Processes with Index Of Dispersion,* February 1991, vol. 9 (2